(19) Europäisches Patentamt

European Patent Office

Office européen des brevets

(11) EP 2 088 728 B1

(12) **EUROPEAN PATENT SPECIFICATION**

(45) Date of publication and mention
of the grant of the patent:
**19.01.2011 Bulletin 2011/03**

(51) Int Cl.:
*H04L 27/26* (2006.01)

(21) Application number: **09160351.4**

(22) Date of filing: **22.02.1999**

(54) **Synchronization preamble structure for OFDM system**

Synchronisierungs-Vorsatzstruktur für OFDM-System

Structure de préambule de synchronisation pour système OFDM

(84) Designated Contracting States:
**AT DE FI FR GB SE**

(43) Date of publication of application:
**12.08.2009 Bulletin 2009/33**

(62) Document number(s) of the earlier application(s) in
accordance with Art. 76 EPC:
**05002279.7 / 1 530 336**
**04002920.9 / 1 439 677**
**99103379.6 / 1 018 827**

(73) Proprietor: **Sony Deutschland GmbH**
**10785 Berlin (DE)**

(72) Inventors:
• **Böhnke, Ralf**
**70327 Stuttgart (DE)**
• **Dölle, Thomas**
**70327 Stuttgart (DE)**
• **Konschak, Tino**
**70327 Stuttgart (DE)**

(74) Representative: **Körber, Martin Hans**
**Mitscherlich & Partner**
**Patent- und Rechtsanwälte**
**Sonnenstraße 33**
**80331 München (DE)**

(56) References cited:
**WO-A-98/00946    GB-A- 2 320 868**
**US-A- 5 450 456**

• **DINIS R ET AL: "CARRIER SYNCHRONIZATION WITH CEPB-OFDM" 1997 IEEE 47TH. VEHICULAR TECHNOLOGY CONFERENCE, PHOENIX, MAY 4 - 7, 1997, vol. 3, no. CONF. 47, 4 May 1997 (1997-05-04), pages 1370-1374, XP000738586 INSTITUTE OF ELECTRICAL AND ELECTRONICS ENGINEERS**
• **SCHMIDL T M ET AL: "LOW-OVERHEAD, LOW-COMPLEXITY BURST SYNCHRONIZATION FOR OFDM" 1996 IEEE INTERNATIONAL CONFERENCE ON COMMUNICATIONS (ICC), CONVERGING TECHNOLOGIES FOR TOMORROW'S APPLICATIONS DALLAS, JUNE 23 - 27, 1996, vol. 3, 23 June 1996 (1996-06-23), pages 1301-1306, XP000625022 INSTITUTE OF ELECTRICAL & ELECTRONICS ENGINEERS ISBN: 0-7803-3251-2**

**Description**

The present invention relates to a method for generating synchronization bursts for OFDM transmission systems, a method for synchronizing wireless OFDM systems, an OFDM transmitter as well as to a mobile communications device comprising such a transmitter.

The present invention relates generally to the technical field of synchronizing wireless OFDM (orthogonal frequency division multiplexing) systems. Thereby it is known to use a synchronization burst constructed using especially designed OFDM symbols and time domain repetitions.

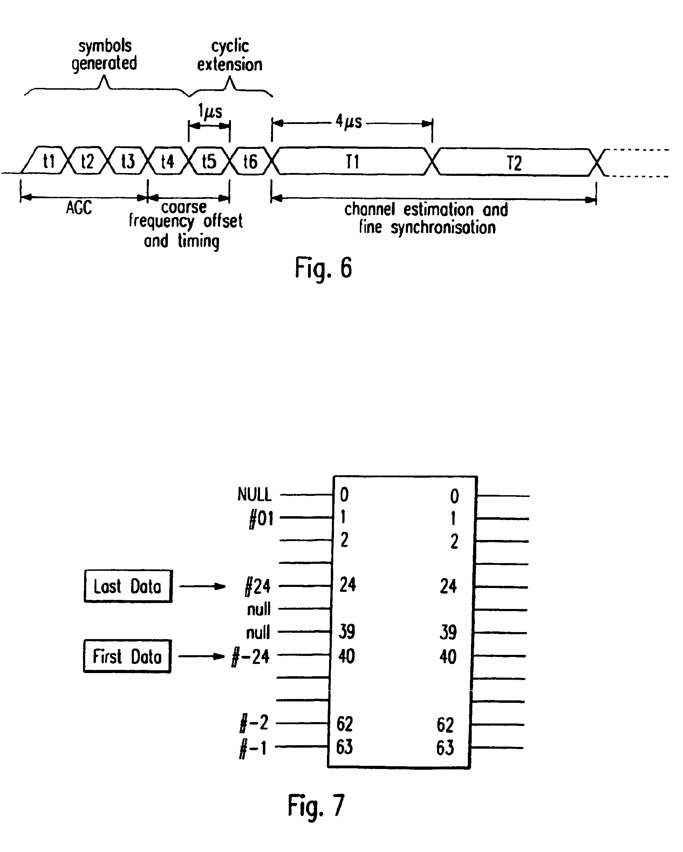

Particularly from the document IEEE P802.11a/d2.0 "Draft supplement to a standard for telecommunications and information exchange between systems - LAN/MAN specific requirements - part 1: wireless medium access control (MAC) and physical layer (PHY) specifications: high-speed physical layer in the 5 GHz band" a synchronization scheme for OFDM systems is proposed. Said known scheme will now be explained with reference to fig. 6 to 8 of the enclosed drawings.

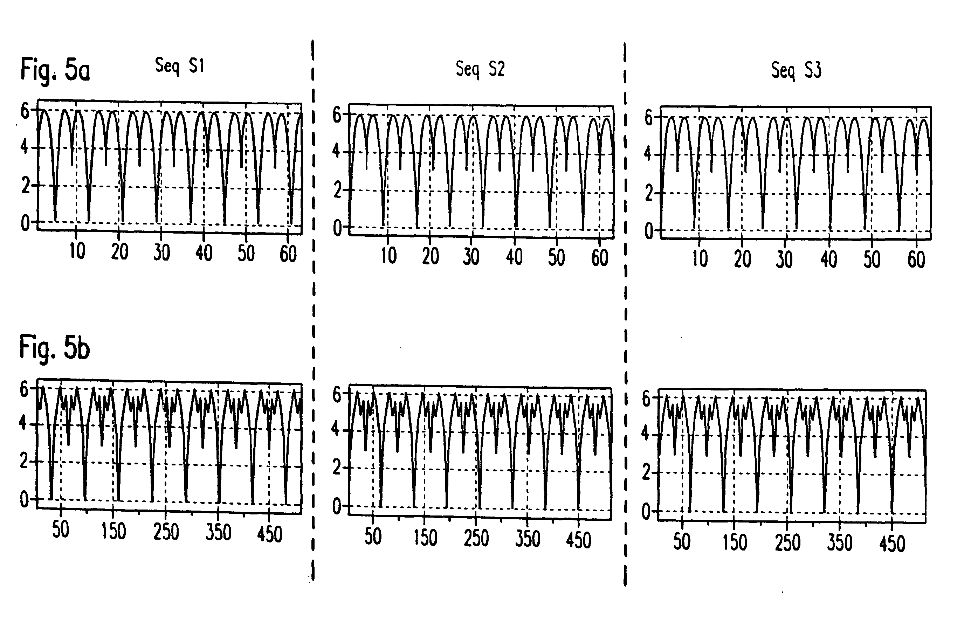

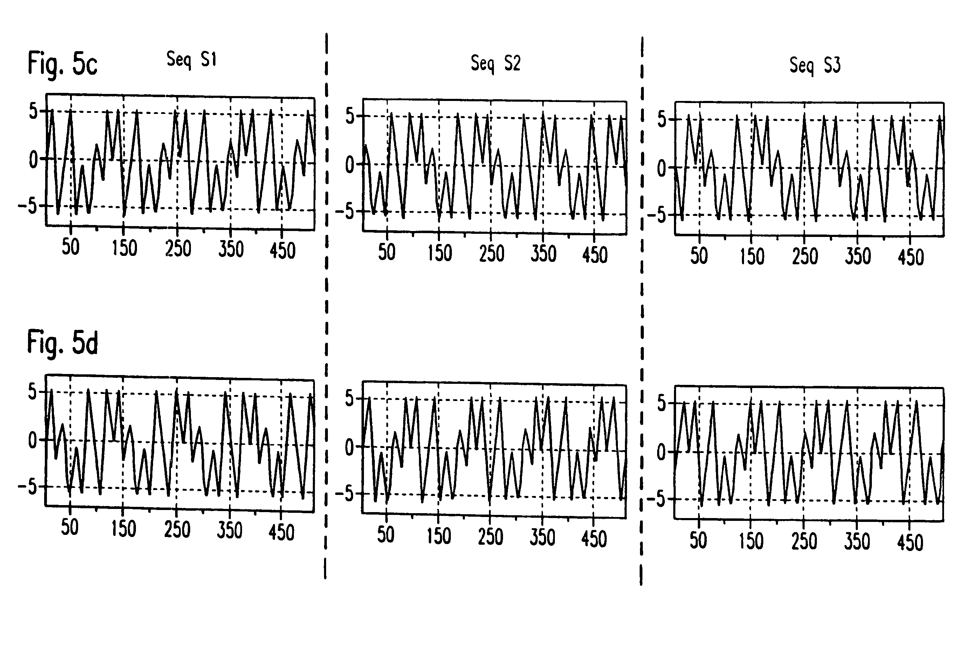

Fig. 6 shows the structure of the known synchronization field. As shown in Fig. 6 the synchronization field consists of so-called short symbols t1, t2,.....t6 and two long symbols T1, T2. In view of the present invention particularly the short symbols t1, t2....t6 are of interest. Among the short symbols t1, t2, ....t6 used for the amplifier gain control (t1, t2, t3) and the course frequency offset and timing control only the symbols t1, t2, t3 and t4 are actually generated, whereas the symbols t5, t6 are cyclic extensions (copies of the symbols t1 and t2, respectively). It is to be noted that fig. 5 shows only the synchronization preamble structure as the structure of the following signal field indicating the type of baseband modulation and the coding rate as well as the structure of further following data fields are not of interest in view of the present invention. For further details reference is made to said prior art document.

The symbols t1, t2, t3, t4 are generated by means of an OFDM modulation using selected subcarriers from the entire available subcarriers. The symbols used for the OFDM modulation as well as the mapping to the selected subcarriers will now be explained with reference to fig. 6.

Each of the short OFDM symbols t1, ....t6 is generated by using 12 modulated subcarriers phase-modulated by the elements of the symbol alphabet:

$$S = \sqrt{2}(\pm 1 \pm j)$$

The full sequence used for the OFDM modulation can be written as follows:

$$S_{-24, 24} = \sqrt{2}*\{1+j, 0,0,0,1+j,0,0,0,-1-j,0,0,0,-1-j,0,0,0,1-j,0,0,0,-1-j,0,0,0,\mathbf{0},$$
$$0,0,0,1+j,0,0,0,1+j,0,0,0,-1-j,0,0,0,1+j,0,0,0,-1+j,0,0,0,1+j\}$$

The multiplication by a factor of √2 is in order to normalize the average power of the resulting OFDM symbol.

The signal can be written as:

$$r_{SHORT}(t) = w_{SHORTI}(t) \sum_{k=-N_2/2}^{N_1/2} S_k \exp(j2\pi k \Delta_{F} t)$$

The fact that only spectral lines of $S_{24, 24}$ with indices which are a multiple of 4 have nonzero amplitude results in a periodicity of $T_{FFT}/4 = 0.8\mu sec$. The interval $T_{TSHORTI}$ is equal to nine 0.8 μsec periods, i.e. 7.2 μsec.

Applying a 64-point IFFT to the vector S, where the remaining 15 values are set to zero, four short training symbols t1, t2, t3, t4 (in the time domain) can be generated. The IFFT output is cyclically extended to result in 6 short symbols t1, t2, t3, ...t6. The mapping scheme is depicted in fig. 7. The so called virtual subcarriers are left unmodulated.

The way to implement the inverse Fourier transform is by an IFFT (Inverse Fast Fourier Transform) algorithm. If, for example, a 64 point IFFT is used, the coefficients 1 to 24 are mapped to same numbered IFFT inputs, while the coefficients -24 to -1 are copied into IFFT inputs 40 to 63. The rest of the inputs, 25 to 39 and the 0 (DC) input, are set to zero. This mapping is illustrated in Fig. 7. After performing an IFFT the output is cyclically extended to the desired length.

With the proposed inverse fast Fourier transform (IFFT) mapping as shown in fig. 7 the resulting time domain signal consists of 4 periodically repeated short symbols t1, t2, t3, t4, and cyclically extended by a copy of t1, t2, which copy is depicted in fig.5 as t5, t6. Note that in the present case only spectral lines with indices which are a multiple of 4 have nonzero amplitude. Other periodic natures can be generated by setting other multiples of the spectral lines to nonzero amplitudes.

Though the known synchronization scheme is very effective, it provides for disadvantage regarding the time domain signal properties.

For OFDM (or in general multicarrier signals) the signal envelope fluctuation (named Peak-to-Average-Power-Ratio=PAPR) is of great concern. A large PAPR results in poor transmission (due to nonlinear distortion effects of the power amplifier) and other signal limiting components in the transmission system (e.g. limited dynamic range of the AD converter).

For synchronization sequences it is even more desirable to have signals with a low PAPR in order to accelerate the receiver AGC (automatic gain control) locking and adjusting the reference signal value for the A/D converter (the whole dynamic range of the incoming signal should be covered by the A/D converter resolution without any overflow/underflow).

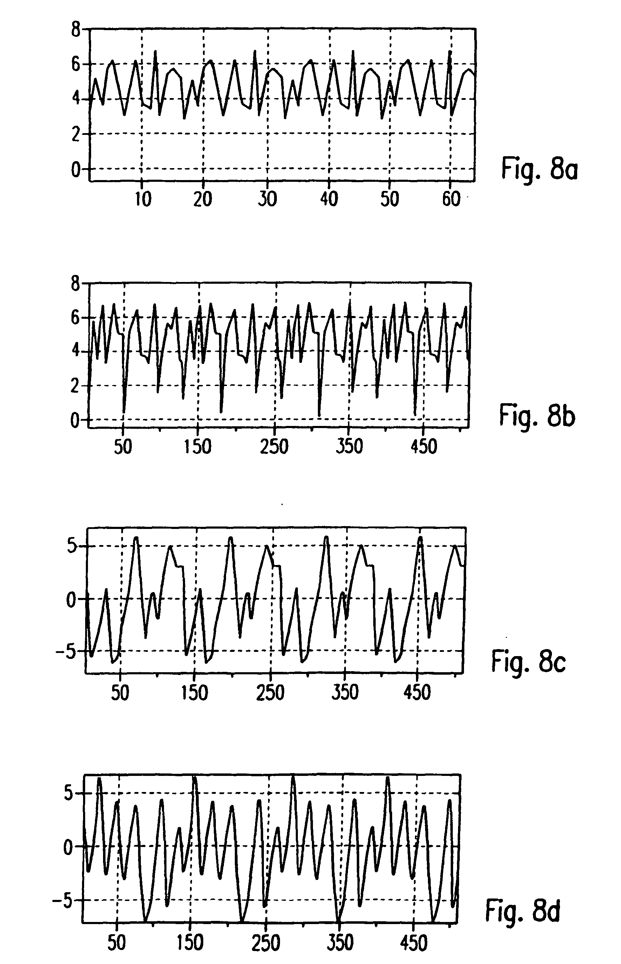

Figures 8a, 8b show the "absolute" (sqrt{In*+Quad *Quad}) value of the resulting time domain signal waveform with the sequences proposed by Lucent Technologies. Oversampling (8*) was considered in order to ensure the peak was captured correctly using the limited 64-point IFFT.

Figures 8c, 8d show the real and imaginary part of the resulting transmitted time domain waveform. The resulting PAPR is 2.9991 dB (no oversampling) and 3.0093 dB (with 8 times oversampling).

Therefore it is the object of the present invention to provide for a synchronization technique which bases on the known synchronization technique but which presents improved time domain signal properties to reduce the requirements for the hardware.

The above object is achieved by means of the features of the independent claims. The dependent claims develop further the central idea of the present invention.

According to the present invention therefore a method for generating synchronization bursts for OFDM transmission systems is provided. Symbols of a predefined symbol sequence are mapped according to a predefined mapping scheme on subcarriers of the OFDM system wherein the symbols of the predefined symbol sequence represent subcarriers with nonzero amplitudes. A synchronization burst is generated by inverse fast Fourier transforming the subcarriers mapped with a predefined symbol sequence. According to the present invention the predefined symbol sequence is optimized such that the envelope fluctuation of the time domain signal (Peak-to-average-power-ratio) is minimized.

The predefined symbol sequence can be chosen such that the following equations are satisfied for all symbols of the predefined symbol sequence:

$$n = 2m,$$

$$C_{i-1} = \pm C_{1-i},$$

n being the number of symbols of the predefined symbol sequence,
m being an integer larger than one,
C being the symbol value, and
i being an integer running from 1 to m.

The mapping of the symbols of the predefined symbol sequence and the Inverse Fast Fourier Transform can be set such that the resulting time domain signal of the synchronization burst represents a periodic nature.

Alternatively the mapping of the symbols of the predefined symbol sequence and the Inverse Fast Fourier Transform is set such that one burst part of the synchronization burst in the time domain is generated and the periodic nature of the synchronization burst in the time domain is achieved by copying the one burst part.

The number of symbols of a symbol sequence (n) can for example be 12.

The above equations define generally the symbol sequences according to the present invention. The predefined symbol sequence can therefore be for example:

A A A -A -A -A -A A -A -A A -A,
wherein A is a complex value.

Alternatively the predefined symbol sequence can be:

A -A A A -A A A A A -A -A -A.

wherein A is a complex value.

Alternatively the following predefined symbol sequence can be used:

A B -A B -A -B B A -B A -B -A.
wherein A, B are complex values.

As a further alternative the following sequence can be used:

A -B -A -B -A B -B A B A B -A,
wherein A, B are complex values.

According to the present invention furthermore a method for synchronizing wireless OFDM systems is provided, wherein a synchronization burst is generated according to a method as set forth above and the synchronization burst is transmitted respectively before the transmission of data fields.

Thereby the time domain signals of the synchronization burst can be precomputed and stored in a memory, such that the computation of the time domain signal of the burst is only effected once.

According to the present invention furthermore a OFDM transmitter is provided comprising a mapping unit for mapping the symbols of a predefined symbols sequence according to a predefined mapping scheme on subcarriers of the OFDM system, wherein the symbols of a predefined symbols sequence represent the subcarriers of the OFDM system with nonzero amplitudes. Furthermore an inverse fast Fourier transforming unit is provided for generating a synchronization burst by inverse fast Fourier transforming the subcarriers of the OFDM mapped with said predefined symbols sequence. The mapping unit thereby is designed such that the resulting time domain signal of the synchronization burst represents a periodic nature. The mapping unit according to the present invention uses a predefined symbol sequence which is such that the envelope fluctuation of the time domain signal of the synchronization burst is minimized.

According to the present invention furthermore a mobile communications device such as set forth above is used.

With reference to the figures of the enclosed drawings referred embodiments of the present invention will now be explained.

Fig. 1 shows schematically a transmitter according to the present invention,

Fig. 2 shows an alternative embodiment for a transmitter according to the present invention,

Fig.3 shows an alternative mapping scheme according to the present invention,

Fig. 4a to 4d show the time domain signal properties achieved with the synchronization symbol structure using OFDM based transmission according to the present invention,

Fig. 5a to 5d show the time domain signal properties of synchronization symbol structures according to alternative embodiments of the present invention,

Fig. 6 shows a synchronization preamble structure known from the prior art,

Fig. 7 shows an IFFT mapping according to the prior art, and

Fig. 8a to 8d show the time domain properties of the synchronization symbol structure according to the prior art,

Fig. 9a and 9b show the time domain properties, particularly the dynamic range of the synchronization symbol structure according to the prior art, and

Fig. 10a and 10b show the time domain properties of the synchronization symbol structure according to further alternative embodiments of the present invention,

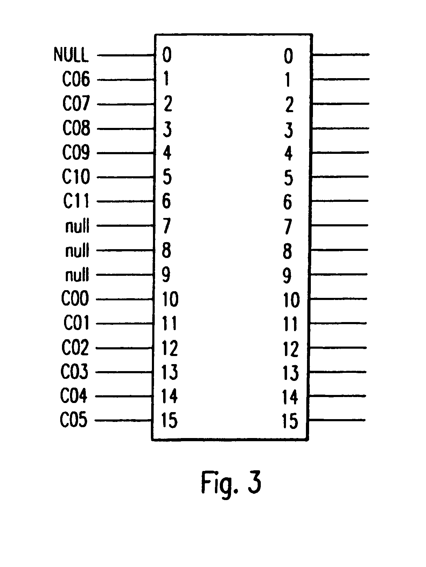

According to the present invention the time domain synchronization burst structure as shown in Fig. 6 is maintained. The IFFT mapping as shown in Fig. 7 can be maintained or alternatively the IFFT mapping according to figure 3 can be used. The symbol sequences mapped to the subcarriers are optimized to sequences which result in a lower PAPR.

According to the present invention a short OFDM symbol (t1,...t6) consists of 12 phase-modulated subcarriers.

|  | C00 | C01 | C02 | C03 | C04 | C05 | C06 | C07 | C08 | C09 | C10 | C11 |
|---|---|---|---|---|---|---|---|---|---|---|---|---|
| Seq0 | A | A | A | -A | -A | -A | -A | A | -A | -A | A | -A |
| Seq 1 | A | -A | A | A | -A | A | A | A | A | -A | -A | -A |
| Seq2 | A | B | -A | B | -A | -B | B | A | -B | A | -B | -A |
| Seq3 | A | -B | -A | -B | -A | B | -B | A | B | A | B | -A |

with $A=\exp(j*2+\pi*\varphi_A)$ and $B=A*\exp(j\frac{\pi}{2})=\exp(j2\pi*\varphi_A+j\frac{\pi}{2})$ and $0.0\leq \varphi_A <1.0$. Generally the predefined symbol sequence therefore is chosen such that the envelope fluctuation of the time domain signal of the synchronization burst is minimized.

Therefore generally the predefined symbol sequence is set such that the following equations are satisfied for all symbols for the predefined symbol sequence:

$$n = 2m,$$

$$C_{i-1} = \pm C_{n-i}$$

wherein n is a number of symbols of the predefined symbol sequence,
m is an integer larger than 1,
c is the symbol value, and
i is an integer value running from 1 to m.

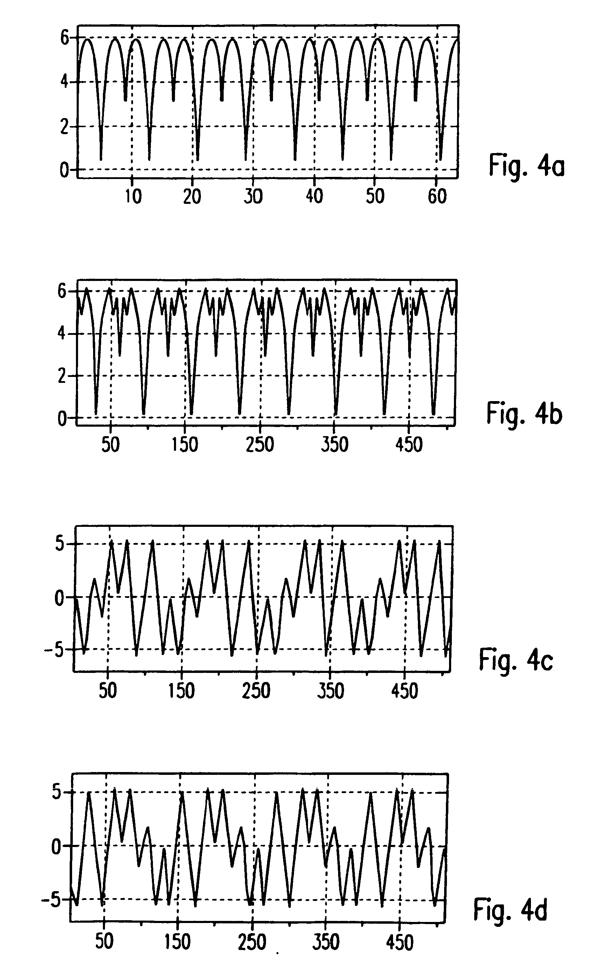

In the following the time domain signal properties of the new sequences according to the present invention will be shown with reference to Fig. 4a to 4d and Fig. 5a to 5d.

For simplicity we use in our demonstration the classical quadriphase symbol alphabet,

$$S=\sqrt{\frac{1}{2}}\,(\pm1\pm j),$$

(this corresponds to ($\varphi_A$ = 0.125)

Table 1: Complex symbol mapping

| Symbol | | |
|---|---|---|
| A | $\exp(j\frac{\pi}{4})$ | $\sqrt{\frac{1}{2}}\,(+1+j)$ |
| -A | $-\exp(j\frac{\pi}{4})=\exp(j\frac{5\pi}{4})$ | $\sqrt{\frac{1}{2}}\,(-1-j)$ |
| B | $\exp(j\frac{\pi}{4}+j\frac{\pi}{2})=\exp(j\frac{3\pi}{4})$ | $\sqrt{\frac{1}{2}}\,(-1+j)$ |

(continued)

| Symbol | | |
|---|---|---|
| -B | $-\exp(j\dfrac{3\pi}{4})=\exp(j\dfrac{7\pi}{4})$ | $\sqrt{\dfrac{1}{2}}\;(+1-j)$ |

Fig. 5a and 5b thereby show the time domain signal (magnitude) when using the optimized sequence according to the present invention in the case of no oversampling/8-times oversampling is effected.

PAPR (in decibel) is limited to 2.059 (even when using a time domain oversampling to capture the actual peak).

Fig. 5c and 5d show the in-phase and quadrature-phase component, respectively, of the resulting wave form. It is clearly visible that the full symbol consists of four repetitions of a short sequence.

Fig. 5a to 5d show graphics corresponding to Fig. 4a to 4d for the other proposed sequences S1, S2 and S3.

Further simulations have shown that not only the PAPR can be optimized but also the dynamic range of the signal should be minimized. Therefore another four sequences, with achieve a small PAPR and at the same time a small overall dynamic range are proposed further below.

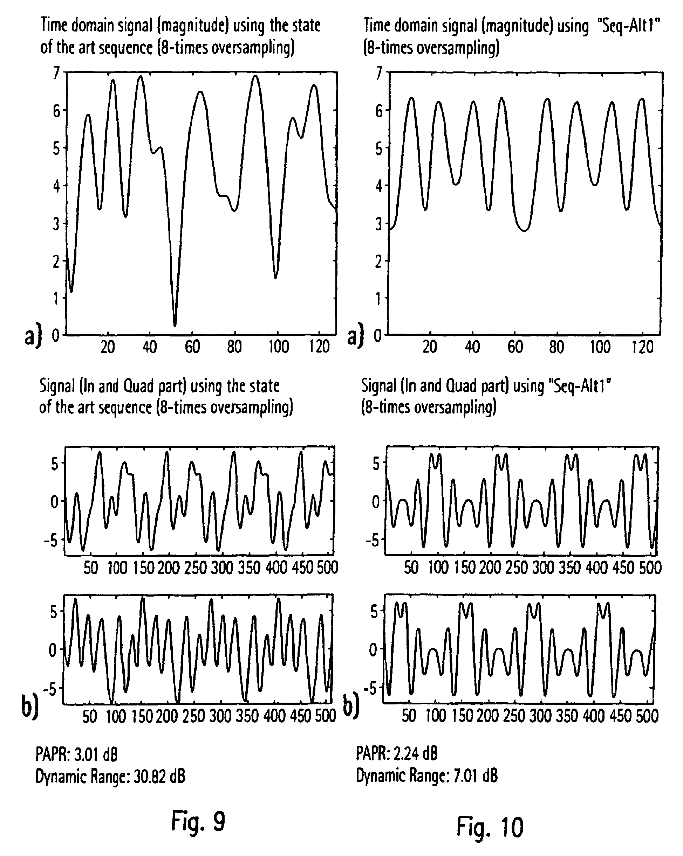

Using the sequence as proposed in the state of the art the PAPR is 3.01 dB and the dynamic range (defined as the ratio of the peak power to the minimum power) is 30.82 dB (see figures 9a and 9b).

Using the sequences according to the present invention and as described above the PAPR is reduced to 2.06 dB, however, the dynamic range is increased as the signal power is '0' at some points.

The symbol sequence is C0, C1, ...., C11 and the mapping is:

S=2* { **C00**, 0, 0, 0, **C01**, 0, 0, 0, **C02**, 0, 0, 0, **C03**, 0, 0, 0, **C04,** 0, 0, 0, C05, 0, 0, 0, **0,** 0, 0, 0, **C06,** 0, 0, 0, **C07,** 0, 0, 0, **C08,** 0, 0, 0, **C09,** 0, 0, 0, **C10**,0,0,0,**C11**}

| | C00 | C01 | C02 | C03 | C04 | C05 | C06 | C07 | C08 | C09 | C 10 | C11 |
|---|---|---|---|---|---|---|---|---|---|---|---|---|
| Seq-Alt0 | A | A | A | A | -A | -A | A | -A | -A | A | -A | A |
| Seq-Alt1 | A | -A | A | -A | -A | A | -A | -A | A | A | A | A |
| Seq-Alt2 | A | B | -A | -B | -A | -B | -B | -A | -B | -A | B | A |
| Seq-Alt3 | A | -B | -A | B | -A | B | B | -A | B | -A | -B | A |

with A = exp (j*2* $\pi$*$\varphi_A$) and $B = A * \exp\left(j\dfrac{\pi}{2}\right) = \exp\left(j2\pi*\varphi_A + j\dfrac{\pi}{2}\right)$ and $0.0 \le \varphi_A < 1.0$.

Using these sequences the PAPR is reduced to 2.24 dB and the dynamic range is limited to 7.01 dB as it is shown in figures 10 a and 10b.

The advantages are the same as described before, however, the clipping problem is further reduced due to the very limited dynamic range of the signal.

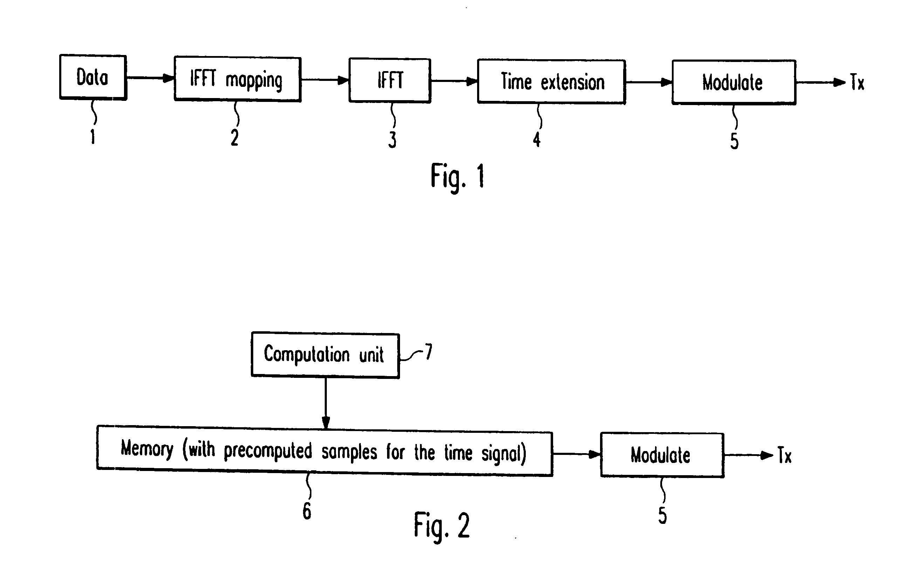

With reference to Fig. 1 and 2 possible implementations of a transmitter according to the present invention will now be explained.

In the transmitter the sync symbol data 1 are prepared and mapped in a IFFT mapping unit 2 to the appropriate IFFT points. The subcarriers of the OFDM system are transformed by a IFFT unit 3 and then the time domain signal is extended in a time extension unit 4 by copying parts of the signals (for example, t1, t2 are copied to t5, t6). The time extended signal is then sent to the I/Q modulator 5.

As shown in Fig. 2 alternatively the time domain signal can be precomputed once in a computation unit 7 and then be stored in a memory 6 for the precomputed sample for the time signal. Then the time domain signal of the synchronization burst can be sent to the modulator 5 directly from the memory 6.

With reference to figure 3 a modified IFFT mapping scheme will now be explained. According to this scheme, the principle of setting only every fourth subcarrier of the OFDM system to a non-zero amplitude (see figure 7) is abandoned. Therefore the time domain signal achieved according to the mapping scheme of figure 3 will not present a periodic nature.

The IFFT size is now only 16 (instead of 64 as it is the case in figure 7). Only one of the bursts t1, t2, ....t6 will be generated. The other bursts can be generated by copying to retain the periodic nature of the synchronization time domain signal necessary for the correlation and synchronization on the receiving side. Therefore for example the time extension unit 4 can perform the copying of the 16-sample burst t1 generated by the IFFT 16 according to figure 7 to the other burst t2, t3, ...t6. Obviously the mapping scheme according to figure 3 reduces the computing effort necessary for the IFFT. The periodic nature of the time domain signal of the SYNCH bursts is therefore no longer achieved by the IFFT step, but by copying the burst t1 generated with the simplified IFFT mapping scheme.

The mapping scheme shown in figure 3 is also advantageous in combination with the precomputing technique shown in figure 2.

According to the present invention therefore a synchronization burst structure to be used in high speed wireless transmission systems is proposed. The synchronization burst is constructed using especially designed OFDM symbols and time domain repetitions. The resulting synchronization burst achieves a high timing detection and frequency offset estimation accuracy. Furthermore the burst is optimized to achieve a very low envelope fluctuation (Low peak-to-average-power-ratio) to reduce the complexity on the receiver and to reduce time and frequency acquisition time at the receiver.

Therefore the synchronization performance can further be improved. As with the scheme according to the present invention the envelope of the OFDM based synchronization burst in the time domain is reduced, the AGC pull-in speed at the receiver can be improved and an accurate time and frequency synchronization can be achieved. Furthermore the synchronization complexity on the receiver side can be reduced due to the reduced resolution requirements necessary due to reduced envelope fluctuation.

The advantages of the present invention can be set forth as following:

- An OFDM based SYNCH symbol with a reduced Peak-to-Average-Power-Ratio (PARP) is proposed,
- Improved synchronization performance (compared to the state of the art proposal),
- Reduced AGC (automatic gain control) pull-in time due to reduced dynamic range of the SYNCH burst,
- Improved AGC settlement (AGC has to adjust to a incoming signal level that later on now overflow/underflow in the AD happens. The reduced dynamic range of the SYNCH burst help to find this reference level more accurate).
- Reduced synchronization detection complexity on the receiver (reduced resolution necessary due to reduced envelope fluctuation).

## Claims

1. A method for generating a synchronization signal for frequency synchronization of OFDM systems, comprising the steps of:

   mapping (2) symbols of a predefined symbol sequence in the frequency domain in accordance with a predefined mapping scheme on a plurality of subcarriers of the OFDM system, wherein the symbols of the symbol sequence define subcarriers with non-zero amplitude, and
   generating a time domain synchronization signal by Inverse Fourier Transforming (3) the subcarriers of the OFDM system mapped with the symbols of the symbol sequence,
   wherein respective symbols of the symbol sequence have a value A being $N \times (+ 1+j)$, or a value -A being $N \times (-1-j)$,
   N being a normalization factor,
   **characterized in that** the predefined symbol sequence is (A -A A -A -A A -A-AAAAA).

2. A method according to claim 1, comprising the step of:

   generating the predefined symbol sequence having a predefined number of symbols corresponding to respective pre-selected ones of a plurality of subcarriers of the OFDM system,
   wherein said predefined symbols are set to non-zero having complex values and others of said symbols are set to zero, such that said predefined symbols are arranged periodically in said predefined symbol sequence in the frequency domain.

3. A method according to claim 1, comprising the steps of:

   receiving a plurality of subcarriers on which the predefined symbol sequence is mapped, said predefined symbol sequence having a predefined number of symbols set to non-zero values and other symbols set to zero values, and transmitting said synchronization signals and said data signals.

4. A method according to claim 1, comprising the steps of:

   receiving a plurality of subcarriers on which the predefined symbol sequence is mapped, and

transmitting said synchronization signals and said data signals,
wherein said predefined symbols are arranged periodically in said predefined symbol sequence in the frequency domain.

5. A method according to claim 1,
wherein said predefined symbols are mapped on every fourth subcarrier of said plurality of subcarriers.

6. Apparatus for generating a synchronization signal for an OFDM transmission system, comprising:

a unit for mapping (2), in the frequency domain, symbols of a predefined symbol sequence in accordance with a predefined mapping scheme on a plurality of subcarriers of the OFDM system, wherein the symbols of the symbol sequence define subcarriers with non-zero amplitude, and
a unit for generating the time domain synchronization signal by Inverse Fourier Transforming (3) the subcarriers of the OFDM system mapped with the symbols of the symbol sequence,
wherein respective symbols of the symbol sequence have a value A being $N \times (+1+j)$, or a value -A being $N \times (-1-j)$, N being a normalization factor,
**characterized in that** the predefined symbol sequence is (A -A A -A -A A -A - AAAAA).

7. Apparatus according to claim 6, comprising:

a unit for generating the predefined symbol sequence having a predefined number of symbols corresponding to respective pre-selected ones of plural subcarriers of the OFDM system,
wherein said predefined symbols are set to non-zero having complex values and others of said symbols are set to zero, such that said predefined symbols are arranged periodically in said predefined symbol sequence in the frequency domain.

8. Apparatus according to claim 6, comprising:

a unit for receiving a plurality of subcarriers on which the predefined symbol sequence is mapped, said predefined symbol sequence having a predefined number of symbols set to non-zero values and other symbols set to zero values, and a transmitter for transmitting said synchronization signals and said data signals.

9. Apparatus according to claim 6, comprising:

a unit for receiving a plurality of subcarriers on which the predefined symbol sequence is mapped, and
a transmitter for transmitting said synchronization signals and said data signals,
wherein said predefined symbols are arranged periodically in said predefined symbol sequence in the frequency domain.

10. Apparatus according to claim 6,
wherein said predefined symbols are mapped on every fourth subcarrier of said plurality of subcarriers.

**Patentansprüche**

1. Verfahren zur Erzeugung eines Synchronisationssignals zur Frequenzsynchronisation eines OFDM Systems, mit den Schritten:

Abbilden (2) von Symbolen einer vorgegebenen Symbolsequenz im Frequenzbereich gemäß einem vorgegebenen Abbildungsschema auf eine Vielzahl von Hilfsträgern in dem OFDM System, wobei die Symbole der Symbolsequenz Hilfsträger mit einer Amplitude definieren, die nicht Null ist, und
Erzeugen eines Zeitbereich-Synchronisationssignals durch Invers-Fourier-Transformieren (3) der Hilfsträger des OFDM Systems, auf die die Symbole der Symbolsequenz abgebildet sind,
wobei jeweilige Symbole der Symbolsequenz einen Wert A, der $N \times (+1+j)$, oder einen Wert -A aufweisen, der $N \times (-1-j)$ ist, wobei N ein Normalisierungsfaktor ist,
**dadurch gekennzeichnet, dass** die vorgegebene Symbolsequenz (A -A A-A -AA-A-AAAAA)ist.

2. Verfahren gemäß Anspruch 1, mit den Schritten:

Erzeugen der vorgegebenen Symbolsequenz mit einer vorgegebenen Anzahl von Symbolen entsprechend jeweiligen vorgegebenen Hilfsträgern von einer Vielzahl von Hilfsträgem des OFDM Systems,
wobei die vorgegebenen Symbole auf nicht Null mit komplexen Werten gesetzt werden und andere der Symbole auf Null gesetzt werden, so dass die vorgegebenen Symbole periodisch in der vorgegebenen Symbolsequenz in dem Frequenzbereich angeordnet sind.

3. Verfahren gemäß Anspruch 1, mit den Schritten:

Empfangen einer Vielzahl von Hilfsträgem auf die die vorgegebene Symbolfrequenz abgebildet ist, wobei die vorgegebene Symbolsequenz eine vorgegebene Anzahl von Symbolen hat, die auf Werte von nicht Null gesetzt sind, und andere Symbole, die auf einen Wert Null gesetzt sind, und Übertragen des Synchronisations-Signals und der Datensignale.

4. Verfahren gemäß Anspruch 1, mit den Schritten:

Empfangen einer Vielzahl von Hilfsträgern auf die die vorgegebene Impulssequenz abgebildet ist, und Übertragen der Synchronisationssignale und der Datensignale,
wobei die vorgegebenen Symbole periodisch in der vorgegebenen Symbolsequenz in dem Frequenzbereich angeordnet sind.

5. Verfahren gemäß 1,
wobei die vorgegebenen Symbole auf jeden 4. Hilfsträger der Vielzahl von Hilfsträgern abgebildet sind.

6. Vorrichtung zur Erzeugung eines Synchronisationssignals für ein OFDM System, mit einer Einheit zum Abbilden (2) im Frequenzbereich von Symbolen einer vorgegebenen Symbolsequenz gemäß einem vorgegebenen Abbildungsschema auf eine Vielzahl von Hilfsträgern in dem OFDM System, wobei die Symbole der Symbolsequenz Hilfsträger mit einer Amplitude definieren, die nicht Null ist, und
einer Einheit zum Erzeugen des Zeitbereich-Synchronisationssignals durch Invers-Fourier-Transformieren (3) der Hilfsträger des OFDM Systems, auf die die Symbole der Symbolsequenz abgebildet sind,
wobei jeweilige Symbole der Symbolsequenz einen Wert A, der $N \times (+1+j)$, oder einen Wert -A aufweisen, der $N \times (-1-j)$ ist, wobei N ein Normalisierungsfaktor ist,
**dadurch gekennzeichnet, dass** die vorgegebene Symbolsequenz (A -A A -A -AA-A-AAAAA) ist.

7. Vorrichtung gemäß Anspruch 6, mit einer Einheit zum Erzeugen der vorgegebenen Symbolsequenz mit einer vorgegebenen Anzahl von Symbolen entsprechend jeweiligen vorgegebenen Hilfsträgern von einer Vielzahl von Hilfsträgern des OFDM Systems,
wobei die vorgegebenen Symbole auf nicht Null mit komplexen Werten gesetzt werden und andere der Symbole auf Null gesetzt werden, so dass die vorgegebenen Symbole periodisch in der vorgegebenen Symbolsequenz in dem Frequenzbereich angeordnet sind.

8. Vorrichtung gemäß Anspruch 6, mit
einer Einheit zum Empfangen einer Vielzahl von Hilfsträgem auf die die vorgegebene Symbolfrequenz abgebildet ist, wobei die vorgegebene Symbolsequenz eine vorgegebene Anzahl von Symbolen hat, die auf Werte von nicht Null gesetzt sind, und andere Symbole, die auf einen Wert Null gesetzt sind, und einem Sender zum Übertragen des Synchronisations-Signals und der Datensignale.

9. Vorrichtung gemäß Anspruch 6, mit
einer Einheit zum Empfangen einer Vielzahl von Hilfsträgem auf die die vorgegebene Impulssequenz abgebildet ist, und
einem Sender zum Übertragen der Synchronisationssignale und der Datensignale, wobei die vorgegebenen Symbole periodisch in der vorgegebenen Symbolsequenz in dem Frequenzbereich angeordnet sind.

10. Vorrichtung gemäß Anspruch 6,
wobei die vorgegebenen Symbole auf jeden 4. Hilfsträger der Vielzahl von Hilfsträgem abgebildet sind.

**Revendications**

1. Procédé de génération d'un signal de synchronisation pour une synchronisation de fréquence de systèmes OFDM, comprenant les étapes consistant à :

   mapper (2) les symboles d'une séquence prédéfinie de symboles dans le domaine fréquentiel conformément à un schéma de mappage prédéfini sur une pluralité de sous-porteuses d'un système OFDM, les symboles de la séquence de symboles définissant des sous-porteuses avec une amplitude non nulle, et
   générer un signal de synchronisation de domaine temporel en appliquant une transformation de Fourier inverse (3) aux sous-porteuses du système OFDM mappées avec les symboles de la séquence de symboles,
   dans lequel les symboles respectifs de la séquence de symboles ont une valeur A qui est N $\times$ (+1+$j$), ou une valeur -A qui est N$\times$ (-1-$j$),
   N étant un facteur de normalisation,
   **caractérisé en ce que** la séquence prédéfinie de symboles est (A -AA-A-AA-A-AAAAA).

2. Procédé selon la revendication 1, comprenant l'étape consistant à :

   générer la séquence prédéfinie de symboles ayant un nombre prédéfini de symboles correspondant aux sous-porteuses sélectionnées respectives d'une pluralité de sous-porteuses du système OFDM,
   dans lequel lesdits symboles prédéfinis sont fixés à des valeurs non nulles ayant des valeurs complexes et les autres desdits symboles sont fixés à des valeurs nulles, de sorte que lesdits symboles prédéfinis soient agencés périodiquement dans ladite séquence prédéfinie de symboles dans le domaine fréquentiel.

3. Procédé selon la revendication 1, comprenant les étapes consistant à :

   recevoir une pluralité de sous-porteuses sur lesquelles la séquence prédéfinie de symboles est mappée, ladite séquence prédéfinie de symboles ayant un nombre prédéfini de symboles fixés à des valeurs non nulles et d'autres symboles fixés à des valeurs nulles, et
   transmettre lesdits signaux de synchronisation et lesdits signaux de données.

4. Procédé selon la revendication 1, comprenant les étapes consistant à :

   recevoir une pluralité de sous-porteuses sur lesquelles la séquence prédéfinie de symboles est mappée, et
   transmettre lesdits signaux de synchronisation et lesdits signaux de données,
   dans lequel lesdits symboles prédéfinis sont agencés périodiquement dans ladite séquence prédéfinie de symboles dans la domaine fréquentiel.

5. Procédé selon la revendication 1,
   dans lequel lesdits symboles prédéfinis sont mappés toutes les quatre sous-porteuses de ladite pluralité de sous-porteuses.

6. Appareil de génération d'un signal de synchronisation pour un système de transmission OFDM, comprenant :

   une unité destinée à mapper (2), dans le domaine fréquentiel, des symboles d'une séquence prédéfinie de symboles conformément à un schéma de mappage prédéfini sur une pluralité de sous-porteuses du système OFDM, les symboles de la séquence de symboles définissant des sous-porteuses avec une amplitude non nulle, et
   une unité destinée à générer le signal de synchronisation de domaine temporel en appliquant une transformation de Fourier inverse (3) aux sous-porteuses du système OFDM mappées avec les symboles de la séquence de symboles,
   dans lequel les symboles respectifs de la séquence de symboles ont une valeur A qui est N $\times$(+1+$j$), ou une valeur -A qui est N$\times$(-1-$j$),
   N étant un facteur de normalisation,
   **caractérisé en ce que** la séquence prédéfinie de symboles est (A -AA-A-AA-A-AAAAA).

7. Appareil selon la revendication 6, comprenant :

   une unité destinée à générer la séquence prédéfinie de symboles ayant un nombre prédéfini de symboles correspondant aux sous-porteuses présélectionnées respectives d'une pluralité de sous-porteuses du système OFDM,

dans lequel lesdits symboles prédéfinis sont fixés à des valeurs non nulles ayant des valeurs complexes et les autres desdits symboles sont fixés à des valeurs nulles, de sorte que lesdits symboles prédéfinis soient agencés périodiquement dans ladite séquence prédéfinie de symboles dans le domaine fréquentiel.

8. Appareil selon la revendication 6, comprenant :

une unité destinée à recevoir une pluralité de sous-porteuses sur lesquelles la séquence prédéfinie de symboles est mappée, ladite séquence prédéfinie de symboles ayant un nombre prédéfini de symboles fixés à des valeurs non nulles et d'autres symboles fixés à des valeurs nulles, et

un dispositif de transmission destiné à transmettre lesdits signaux de synchronisation et lesdits signaux de données.

9. Appareil selon la revendication 6, comprenant :

une unité destinée à recevoir une pluralité de sous-porteuses sur lesquelles la séquence prédéfinie de symboles est mappée, et

un dispositif de transmission destiné à transmettre lesdits signaux de synchronisation et lesdits signaux de données.

dans lequel lesdits symboles prédéfinis sont agencés périodiquement dans ladite séquence prédéfinie de symboles dans le domaine fréquentiel.

10. Appareil selon la revendication 6,
dans lequel lesdits symboles prédéfinis sont mappés toutes les quatre sous-porteuses de ladite pluralité de sous-porteuses.

| Data | IFFT mapping | IFFT | Time extension | Modulate | → Tx |

1　　2　　3　　4　　5

Fig. 1

Computation unit ⌐7

Memory (with precomputed samples for the time signal) → Modulate → Tx

6　　Fig. 2　　5

EP 2 088 728 B1

12

Fig. 3

Fig. 4a

Fig. 4b

Fig. 4c

Fig. 4d

Fig. 5a

Seq S1  Seq S2  Seq S3

Fig. 5b

Fig. 5c

Seq S1

Seq S2

Seq S3

Fig. 5d

EP 2 088 728 B1

symbols
generated
cyclic
extension

1 μs
4 μs

t1 t2 t3 t4 t5 t6 T1 T2

AGC
coarse
frequency offset
and timing
channel estimation and
fine synchronisation

Fig. 6

NULL — 0    0
#01 — 1    1
2    2

Last Data → #24 — 24    24
null
null — 39    39
First Data → #-24 — 40    40

#-2 — 62    62
#-1 — 63    63

Fig. 7

Fig. 8a

Fig. 8b

Fig. 8c

Fig. 8d

Time domain signal (magnitude) using the state
of the art sequence (8-times oversampling)

Time domain signal (magnitude) using "Seq-Alt1"
(8-times oversampling)

a)

a)

Signal (In and Quad part) using the state
of the art sequence (8-times oversampling)

Signal (In and Quad part) using "Seq-Alt1"
(8-times oversampling)

b)

b)

PAPR: 3.01 dB
Dynamic Range: 30.82 dB

PAPR: 2.24 dB
Dynamic Range: 7.01 dB

Fig. 9

Fig. 10